Europäisches Patentamt

European Patent Office

Office européen des brevets

(19)

(11)    EP 1 282 000 B1

(12)    EUROPEAN PATENT SPECIFICATION

(45) Date of publication and mention
    of the grant of the patent:
    **16.11.2005   Bulletin 2005/46**

(51) Int Cl.[7]: **G02F 1/133**, G02F 1/141

(21) Application number: **01118435.5**

(22) Date of filing: **31.07.2001**

(54) **Liquid crystal cell system and method for improving a liquid crystal cell system**

Flüssigkristallzellensystem und Methode zur Verbesserung eines Flüssigkristallzellensystems

Système de cellules à cristaux liquides et procédé permettant d'améliorer un système de cellules à cristaux liquides

(84) Designated Contracting States:
    **DE FR GB**

(43) Date of publication of application:
    **05.02.2003   Bulletin 2003/06**

(73) Proprietors:
    • **Sony Deutschland GmbH**
      **50829 Köln (DE)**
    • **SONY CORPORATION**
      **Tokyo 141 (JP)**

(72) Inventors:
    • **Yasuda, Akio**
      **c/o Advanced Techn. Center Stuttgart**
      **70327 Stuttgart (DE)**
    • **Hashimoto, Shunichi Sony Corporation**
      **Tokyo (JP)**
    • **Haase, Wolfgang Inst. Physical Chemistry**
      **64287 Darmstadt (DE)**
    • **Blinov, Lev Mikhailovich Inst. Physical Chmistry**
      **64287 Darmstadt (DE)**
    • **Podgornov, Fedor Inst. Physical Chemistry**
      **64287 Darmstadt (DE)**
    • **Sinha, Aloka Inst. Physical Chemistry**
      **64287 Darmstadt (DE)**
    • **Pozhidayev, Eugene Inst. Physical Chemistry**
      **64287 Darmstadt (DE)**

(74) Representative: **Appelt, Christian W.**
    **FORRESTER & BOEHMERT**
    **Anwaltssozietät**
    **Pettenkoferstrasse 20-22**
    **80336 München (DE)**

(56) References cited:
    **EP-A- 0 795 777          US-A- 5 644 372**
    **US-A- 6 072 454          US-A1- 2001 005 248**
    **US-B1- 6 245 258**

    • **M. COPIC: "Influence of ions on the 'V-shaped'
      electro-optic response of ferroelectric liquid
      crystals" PHYSICAL REVIEW E, vol. 63, 26
      February 2001 (2001-02-26), page 31703
      XP001038452**
    • **RUDQUIST ET AL.: "Unraveling the mystery of
      'thresholdless antiferroelectricity': high
      contrast analog electro-optics in chiral smectic
      liquid crystals" PROCEEDINGS OF THE 1999 SID
      INTERNATIONAL SYMPOSIUM, 1999, pages
      409-413, XP001037175 Santa Ana, CA, USA**
    • **REYNAERTS C ET AL: "POLARISATION
      AGAINST VOLTAGE HYSTERESIS LOOP AT
      SURFACE STABILIZED FERROELECTRIC
      LIQUID CRYSTALS" JOURNAL OF PHYSICS D.
      APPLIED PHYSICS, IOP PUBLISHING, BRISTOL,
      GB, vol. 22, no. 10, 14 October 1989 (1989-10-14),
      pages 1504-1509, XP000070820 ISSN: 0022-3727**

EP 1 282 000 B1

## Description

The present invention relates generally to the liquid crystal device technology and more specifically to a liquid crystal cell system comprising at least one ferroelectric or antiferroelectric liquid crystal cell, wherein the cell comprises a liquid crystal material and at least two transparent substrates, enclosing said liquid crystal material, wherein each substrate has electrode means and each substrate has an alignment layer for aligning said liquid crystal material.

The invention further relates specifically to a method for improving a liquid crystal cell system by achieving a substantially thresholdless, V-shaped form of the characteristic graph "optical transmittance versus applied external voltage V" of a liquid crystal cell system comprising at least one liquid crystal cell for a given operation frequency f and a given operation voltage range of the at least one liquid crystal cell.

A conventional liquid crystal cell normally comprises at least two transparent substrates, normally two glass plates, separated by spacers. The internal surfaces of the substrates are covered with transparent electrode films, on which generally thin alignment layers for aligning a liquid crystal material, enclosed between said substrates, are deposited (it is however in principle also possible to provide cells without such alignment layers). Such a conventional liquid crystal cell is a basic element for a majority of liquid crystal devices, such as displays, light shutters, deflectors and spatial light modulators etc.

In the state of art different liquid crystal cell systems are known. Typical liquid crystal cells often have a nematic liquid crystal configuration, planar, homeotropic, hybrid, twisted, supertwisted, etc. They are widely used in modern display technology, as can be e.g. taken from I.C. Sage "Displays", Chapter 9 in Handbook of Liquid Crystals, Wiley-VCH, Weinheim, 1998, vol. 1, page 731).

Nematic liquid crystals are nonpolar materials and their response is independent of the polarity of the applied electric field. Therefore, they can be driven to an "on" state by any polarity of the applied field, but have to slowly relax back to the "off" state without an applied field. This property limits the speed of the field response for the nematic liquid crystals.

Ferroelectric liquid crystals having a chiral lamellar (smectic) structure on the other hand possess an intrinsic polarity. Such cells can be driven to "on" and "off" (or "0" and "1") states by external voltages having opposite polarities, whereas such switching is much faster than the switching of nematic liquid crystals, as mentioned above. The two ferroelectric states have an intrinsic memory, therefore bistable ferroelectric liquid crystal cells can be realized, if necessary.

Also antiferroelectric liquid crystals can be driven to two field induced ferroelectric states, whereby a characteristic hysteresis for the electrooptical response is present, as mentioned e.g. in H. Takezoe et al, "On the Appearance of the Antiferroelectric Phase", Ferroelectrics **122,** 167 (1991).

However, in some applications the hysteresis results in an undesirable form of the electrooptical response, which for example does not allow the realization of a gray scale. Several publications deal with the so-called "V-shape" or "thresholdless" switching mode of ferroelectric liquid crystals (FLC) and antiferroelectric liquid crystals (AFLC), see e.g. Lagerwall, S.T., "Ferroelectric and Antiferroelectric Liquid Crystals", Wiley-VCH, Weinheim, 1999, page 390. In this document a cell is described with a bookshelf alignment of smectic layers installed between crossed polarizers with preferable molecular orientation along the electric vector of incident light. When a triangular voltage waveform is applied to the cell, the field induced optical transmission does show no threshold and no hysteresis (in characteristic graph "optical transmittance versus applied external voltage"), however, only for one certain operation frequency f of the field. As the characteristic graph showing the optical transmission versus the applied external voltage looks similar to the letter "V", this switching mode at a specific frequency is called "V-shape" switching mode, as mentioned above.

The "V-shape" or "thresholdless" switching mode is realized only at one certain frequency, when the direction of the hysteresis changes from a normal hysteresis to an abnormal hysteresis when changing the operation frequency f (for the latter, the optical axis is not retarded with respect to the field but goes ahead of the field, in contradiction with common sense). Furthermore, the genuine V-shape switching mode is observed not only exclusively at the so called hysteresis inversion frequency, as described above, but can be also only realized (i) in a certain region of a low frequency range, typically between 0.1 Hz and a few Hz, (ii) with a thickness of a liquid crystal layer of 1 to 2 $\mu$m and (iii) with rather thick polyimide layers (typically 100 to 200 nm) for orienting ferroelectric and antiferroelectric liquid crystals (FLC or AFLC). Further the realization of a V-shape or thresholdless switching mode is very much depending on the utilized liquid crystal material.

There are several models trying to explain, why and when this "V-shape" or "thresholdless" switching mode occurs, however, no proved explanation has been found yet.

According to one explanation (Langevin model) it is assumed that this V-shape switching mode can be only observed for particular antiferroelectric liquid crystals (AFLC), where a certain frustrated phase occurs in which the azimuthal direction of the tilt is "fluctuating" from layer to layer and the electric field "collects" all the local (in single layers) polarization into one direction (see e.g. Takeuchi, M., et al; "V-shaped Switching Due to Frustoelectricity in Antiferroelectric Liquid Crystals", Ferroelectrics, **246**, 1 (2000)). In this model the accumulated ionic charges play a crucial role in the inversion of hysteresis.

According to a further model, the so-called "block model", any conventional ferroelectric liquid crystal (FLC) with high spontaneous polarization $P_s$ automatically forms a block of uniformly oriented local spontaneous polarization ($P_s$) and there are orientational kinks close to both interfaces. Under the influence of a field, the whole block is reoriented and the kinks play a role of a lubricant. (See e.g. Rudquist, R. et al, "Unraveling the Mystery of Thresholdless Antiferroelectricity: High Contrast Analog Electro-Optics in Chiral Smectic C", J. Mat. Chem., **9**, 1257 (1999)).

According to this model a very high spontaneous polarization $P_s$ of the ferroelectric liquid crystal material is necessary to achieve the desired results.

According to a third model the V-shape switching mode is due to a special kind of polar anchoring of a ferroelectric liquid crystal FLC to a polymer aligning layer (Rudquist, P., et al; "The Hysteretic Behavior of V-shape Switching Smectic Materials", Ferroelectrics, **246**, 21 (2000)).

The above mentioned documents show in general that the mechanism for "V-shape" switching has not yet been understood, the realization of such a V-shape or thresholdless switching mode is more or less accidental and can especially only occur with very low operating frequencies f of the liquid crystal cell.

Both from EP 0 795 777 A2 and from US2001/0005248 A1 liquid crystal display devices are known, however no clear teaching on how a V-shape or thresholdless switching mode can be securely achieved with different and especially high frequencies f of the liquid crystal cell.

Both documents disclose all the features of the preambles of claims 1 and 15.

It is therefore an object of the present invention to provide a liquid crystal cell system comprising at least one liquid crystal cell being capable of operating in a V-shape or thresholdless switching mode also with higher operating frequency for a variety of liquid crystal materials and a variety of liquid crystal cell geometric arrangements, whereby the liquid crystal cell system should be easily achievable. It is further an object of the present invention to provide a method for achieving a substantially thresholdless, V-shape switching mode for a liquid crystal cell system with given geometry and given liquid crystal material and for a given operating frequency and/or a given operating voltage range.

This object is achieved by a liquid crystal cell system according to claim 1 and a method according to claim 15. Claims 2 to 14 refer to preferred embodiments of the liquid crystal cell system, claims 16 to 18 refer to specific advantageous realizations of the inventive method according to claim 15.

According to the invention the liquid crystal cell system comprises capacitance means C and resistance means R coupled to said at least one liquid crystal cell of a respective cell system, so that a voltage divider between said at least one liquid crystal cell and said capacity means C and said resistance means R is formed. Said capacitance means C and said resistance means R are arranged in a way, that said at least one liquid crystal cell shows a substantially thresholdless, V-shaped form of a characteristic graph "optical transmittance versus applied external voltage V" for a given operation Frequency f and a given operation voltage range of the at least one liquid crystal cell.

This can be realized by providing an electrooptical cell filled with a ferroelectric or antiferroelectric liquid crystal material with a simple "electric circuit" comprising capacitors and resistors and different combinations thereof, connected in series or in parallel to said liquid crystal cell. The circuit together with a liquid crystal cell thereby forms a voltage divider, which complex dividing ratio depends on the frequency and on the magnitude of the applied field and the two realized impedances, namely the impedance of said circuit and the impedance of said liquid crystal cell.

Since the impedance of the liquid crystal cell is voltage dependent, the dividing ratio, the voltage across the cell and its phase with respect to the external voltage are changing during cell switching. This provides a dynamic feedback, which dramatically influences the electro-optic response of the cell to an external voltage, applied to the system.

When arbitrarily chosen ferroelectric or antiferroelectric liquid crystal materials in a liquid crystal cell do show an undesirable hysteresis of the electrooptical response for a desired operation frequency f (as it is normally the case when higher frequencies f are desired), the connection of the said electric elements to a liquid crystal cell changes the regime and the switching becomes thresholdless and the field dependence of the optical transmission acquires the so-called V-shape, which otherwise would require a development of special ferroelectric or antiferroelectric mixtures and aligning layers as well as a specific geometry of the liquid crystal cell, or might be impossible at all for the desired frequency.

The present invention is based on the realization that the "thresholdless", hysteresis free "V-shape" switching is rather an apparent but not a real effect. The switching of the director (the optical axis) of the liquid crystal layer has in reality a threshold and a normal hysteresis, if the optical transmittance is plotted versus "voltage on a liquid crystal layer" and not versus the "total voltage on the liquid crystal cell", which always includes inner dielectic layers. Due to these layers a voltage divider is formed between the dielectric layers and the liquid crystal layer and the liquid crystal suffers a reduced voltage with a considerable phase shift with respect to the voltage applied from a function generator to the electrodes of a liquid crystal cell in a liquid crystal cell system.

The liquid crystal layer changes its dynamic impedance during its switching under a certain voltage and therefore changes the voltage dividing ratio. As a consequence of this "feedback", the voltage waveform across a liquid crystal layer (and not across the complete liquid crystal cell) acquires a new shape, which is not triangular, even if the applied external voltage ($U_{tot}$) has such a triangular form. The optical axis (the director) or a liquid crystal material controlled by the new wave form rotates still with a threshold and a hysteresis, but in a more complicated way. As a result, the optical transmittance versus the "voltage across the cell" does look like a thresholdless, V-shape curve without the hysteresis for a specific frequency.

It is therefore possible to influence the voltage wave form <u>effective</u> for the optical transmittance of the liquid crystal material by connecting above mentioned capacitance means C and/or resistance means R to the at least one liquid crystal cell or the cell system respectively, whereby the value of the capacitance and the resistance are arranged depending on the geometry of the liquid crystal cell and the liquid crystal material utilized in the cell so that a V-shape switching mode (V-shape form of graph "optical transmittance versus applied external voltage") is achieved for the desired operation frequency of the cell.

In a preferred embodiment the capacitor means C are connected in series with said at least one liquid crystal cell. It is further preferred to connect the resistance means R in parallel with said at least one liquid crystal cell, whereby a combination of capacitor means C and resistor means R is especially preferred.

Preferably the capacitance means C are selected to have a value in the range between 1/10 to 10 times the capacitance $C_{LC}$ of a liquid crystal layer.

According to a preferred embodiment, the resistance means R is chosen according to the following formula

$$f=(R+R_{LC})/2\pi R^*R_{LC}C_{LC},$$

wherein f is a given or desired operation frequency and $R_{LC}$ and $C_{LC}$ are the resistance and the capacitance of said liquid crystal layer respectively. With this magnitude of the capacitance means most geometric arrangements and liquid crystal materials utilized in liquid crystal cells or respective systems can be covered and the V-shape switch modus can be achieved also for very high operation frequencies f.

The resistance means R are preferably chosen to have a resistance considerably less than the resistance $R_{LC}$ of said liquid crystal layer, preferably the resistance means R having a value less than 50 % of the resistance $R_{LC}$ of said liquid crystal layer. This will also reduce the temperature drift of the V-shape response parameters of the liquid crystal cell.

In a specially preferred embodiment the liquid crystal cell system is provided both with capacitance means C, connected in series with said at least one crystal cell, resistance means R, connected in parallel with said at least one liquid crystal cell, and additional resistance means $R_1$, connected in a parallel to said capacitance means C. This will especially provide the possibility to apply a D.C. bias voltage to the liquid crystal layer or to discharge the liquid crystal layer from accumulated charges.

Preferably the resistor $R_1$ has a high resistance magnitude exceeding $1/2\pi fC$, whereas C being the capacitance means, as mentioned above.

The capacitance means C and/or resistance means R according to the invention can be realized in different forms: In one preferred embodiment of the liquid crystal cell system each liquid crystal cell comprises said capacitance and/or resistance means, whereas these means are preferably integrated within said liquid crystal cell. In case of these integrated capacitance and/or resistance means, these means can be either provided inside of said transparent substrates of each liquid crystal cell or outside of said transparent substrates. It is especially preferred that the capacitance means and/or resistance means are realized by dielectric or semiconductive layers, especially, as mentioned above, arranged at said transparent substrates of said liquid crystal cell.

In a preferred embodiment the capacitor can be made in form of a polymer layer deposited preferably on the inner surfaces of said liquid crystal cell. In a preferred embodiment the resistor can be made by varying electrodes and/or changing liquid crystal material.

In another preferred embodiment the capacitance and/or resistance means can be arranged external of said liquid crystal cells or even external of said liquid crystal cell system. It is in those cases also possible that two or more liquid crystal cells or all cells in a system are coupled to the capacitance means and/or the resistance means.

The external arrangement of the capacitance and/or resistance means is easier and in principle cheaper to realize, whereby standard electronic resistors and/or capacitors or an integrated circuit comprising those resistors and/or capacitors can be utilized. For other technological applications, e.g. in matrix displays, an integrated realization is more preferable.

In a further preferred embodiment the liquid crystal cell system comprises multiple liquid crystal cells which are connected in an arbitrary manner, preferably in series, in parallel, in a mosaic configuration or in a matrix configuration or in any combination thereof. Large liquid crystal cell systems can thereby be provided for different applications. Preferably the liquid crystal material has a high spontaneous polarization $P_S$, preferably reaching values above 5 $nC/cm^2$, more preferably above 15 $nC/cm^2$ and most preferably above a value of 30 $nC/cm^2$.

The liquid crystal material utilized in a liquid crystal cell has further a rotational viscosity being as low as possible, preferably below 1.5 Pa·s (15 Poise), more preferably below 1.0 Pa·s (10 Poise) and most preferably below a value of 0.5 Pa·s (5 Poise).

The liquid crystal material is preferably further doped with conductive impurities, especially with ionic impurities, in order to optimize its impedance.

The present invention further relates to a method for achieving improved liquid crystal cells or a liquid crystal cell system especially based on conventional liquid crystal cells or liquid crystal cell systems.

According to the inventive method capacitance means C and/or resistance means R are coupled to said at least one liquid crystal cell in a liquid crystal cell system, so that a voltage divider between said at least one crystal cell and said capacitance means C and/or resistance means R is formed. It is thereby possible, as mentioned above, to influence the characteristic conditions of the liquid crystal cell in a way to provide a cell with a characteristic thresholdless, V-shaped graph "optical transmittance versus applied external voltage V", being important for multiple applications, especially for higher operation frequencies f. With the inventive method (as well as with the inventive liquid crystal cell system) the thresholdless, V-shape switching mode can thereby also be realized for high operating frequencies, being essential for a lot of modern applications. For specific realizations of the inventive method it is referred to the above description of the liquid crystal cell system, whereby it is mentioned that in principle all above mentioned inventive measurements are applicable also for the inventive method.

Further features and advantages of the present invention will become more apparent in view of the following schematic drawings:

Fig. 1a and 1b    show equivalent circuits for an embodiment of a liquid crystal cell according to the invention;

Fig. 2    shows a typical liquid crystal cell according to the state of art;

Fig. 3a and 3b    show equivalent electric circuits for a conventional liquid crystal cell;

Fig. 4    shows the transmittance versus an applied voltage for different operation frequencies for a liquid crystal cell according to the state of art;

Fig. 5    shows the threshold voltage for optical transmittance as a function of frequency for a liquid crystal cell according to the state of art (curve 1) and a modified liquid crystal cell according to the invention (curve 2);

Figs. 6a to 6d    show graphs representing the V-shape optical transmittance versus an external applied voltage of a cell according to the state of art (Fig. 6a) and for liquid crystal cells according to the invention (Figs. 6b to 6d for the "hysteresis inversion frequency");

Fig. 7    shows the V-shape optical transmittance versus an external applied voltage of a different cell according to the state of art (Fig. 7a) and the respective modified cell according to the invention (Fig. 7b) for the "hysteresis inversion frequency";

Fig. 8    shows the threshold voltage for optical transmittance as a function of frequency for the cell utilized for the measurements of the transmittance in Fig. 7;

Fig. 9    shows the form of the oscillograms for external voltage $U_{tot}$, repolarization current $I_p$ and the voltage on the liquid crystal cell $U_{cell}$ for a cell according to the invention; and

Fig. 10    shows the optical transmittance of a cell in different coordinates, namely as a function of the total voltage T ($U_{tot}$) and as a function of the voltage on the liquid crystal cell ($R(U_{cell})$).

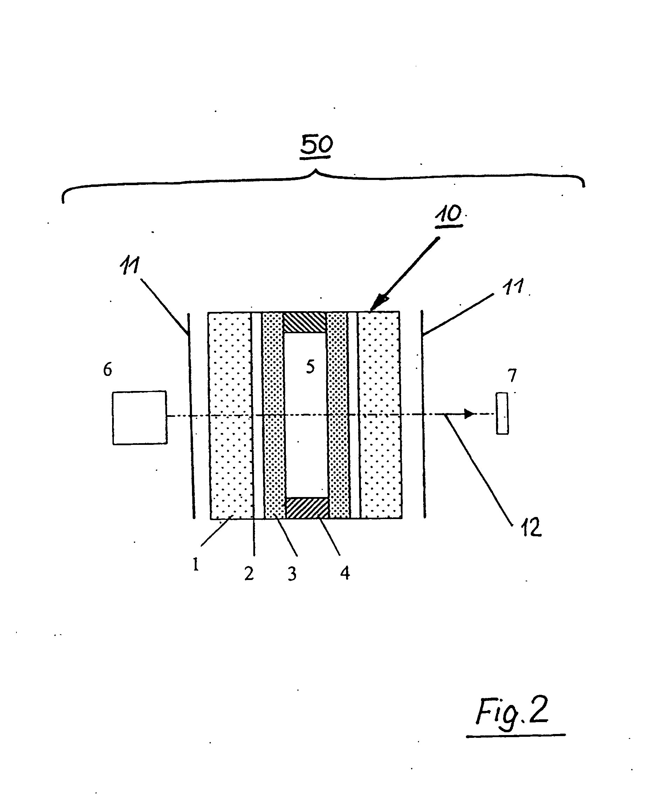

Fig. 2 shows a typical liquid crystal cell 10 in a liquid crystal cell system 50 according to the state of art. The liquid crystal cell 10 comprises two transparent substrates 1, being realized in this embodiment by two glass plates. The internal surfaces of the substrates 1 are covered with transparent electrode films 2, on which thin alignment layers 3 for aligning a liquid crystal material 5 are deposited.

A liquid crystal material 5 is enclosed between the substrates 1, covered with the transparent electrode film 2 and the alignment layer 3, whereby the substrates 1 are separated by thin spacers 4.

For a simplification only one liquid crystal cell 10 is shown, however, it should be understood that the liquid crystal cell system 50 comprises of a plurality of liquid crystal cells 10.

For a typical application the liquid crystal cell 10 is positioned between two cross polarizers 11 and a light source 6 emits a beam of light 12 which passes through the cell 10.

In the embodiment shown in Fig. 2 the optical transmittance is detected by a photomultiplier 7, the shown arrangement can therefore be also utilized for the measurements described herein after.

Instead of the photomultiplier 7 also any other device can be provided, it is further also possible that a user of the system looks at the light beam transmitted through the cell.

A typical cell realized according to the general structure shown in Fig. 2 comprises as alignment layers two polymer layers, each with the thickness of about 50 nm, and a FLC (ferroelectric liquid crystal) layer with a thickness of about 2 μm. The cell area is in the range of 1 cm$^2$ and the dielectric constant of the used polymer is $\varepsilon_p = 2,6$, whereas the specific resistance is $\rho_p \approx 10^{14} \Omega$cm. This will lead to a polymer layer capacitance of $C_p \approx 50$nF

and a polymer layer resistance of $R_p \approx 10M\Omega$, leading to a characteristic RC constant of $\tau_p \approx 500s$. It shall be noticed at this point that also cells with only one alignment layer or without alignment layers can be realized.

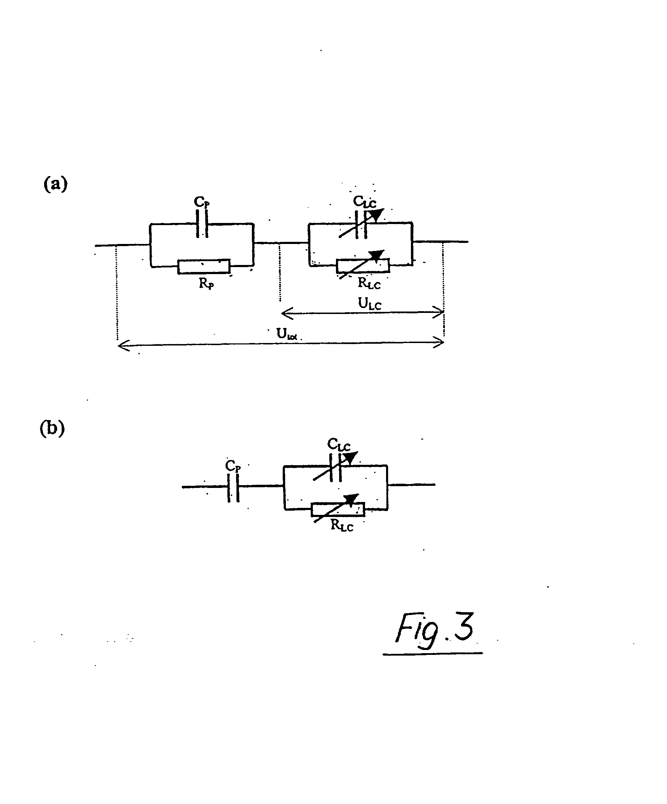

Fig. 3a shows an equivalent electric circuit for the liquid crystal cell shown in Fig. 2 and described above. Capacitor $C_p$ and resistor $R_p$ correspond to the permanent capacitance and the resistance of the polymer layer used as an alignment layer 2 (see Fig. 2), whereas the capacitor $C_{LC}$ and resistor $R_{LC}$ correspond to the dynamic capacitance and resistance of the liquid crystal layer. $U_{tot}$ is the total voltage applied to the cell (applied external voltage), whereas $U_{LC}$ is the voltage "seen" by the liquid crystal, therefore the voltage being effective for the optical transmittance realized by the liquid crystal cell.

If one is not interested in very low frequencies, especially in frequencies of $f << 2(\pi\tau_p)^{-1} \approx 1$ mHz, the resistance $R_p$ of the alignment layer can be ignored and the equivalent circuit can be simplified, as it is shown in Fig. 3b.

The low-frequency dielectric constant of a FLC is typically about 100 and dramatically decreases down to 5 with an increasing applied field, therefore with increasing applied voltage. Therefore the FLC layer capacitance $C_{LC}$ changes with the voltage on the cell from about 100 nF to 5 nF. With a specific resistance of $\rho_{LC} \approx 10^{10}\Omega$cm, $R_{LC} \approx 2M\Omega$ and RC time constant of a liquid crystal $\tau_{LC}$ is changing from 200 to about 10ms. At frequencies $f << (2\pi\tau_{LC})^{-1} \approx 100$ Hz, the A.C. voltage on a liquid crystal layer $U_{LC}$ is controlled by two impedances, namely that of the polymer used as alignment layer $A=(\omega C_p)^{-1}$ and that of the liquid crystal layer $B=[(R_{LC})^{-1}+\omega C_{LC}]^{-1}$, whereas the voltage $U_{LC}$ follows the equation $U_{LC} = B/(A+B)$. The impedance of the polymer alignment layer A is constant, whereas the impedance of the liquid crystal layer B is changing dramatically (with increasing frequency, the switching of spontaneous polarization is accompanied by dielectric losses, which also contribute to the $R_{LC}$ value, therefore both $C_{LC}$ and $R_{LC}$ are dynamic parameters.

The polymer alignment layer does not only orient the liquid crystal material, but it also forms a shoulder for a voltage divider ($U_{LC}$ and $U_{tot}$) and is also capable to discharge any surface charges accumulated at the interface between the liquid crystal material and the polymer alignment layer. The liquid crystal material plays a role of a switcher arid also contributes to a change in dividing ratio.

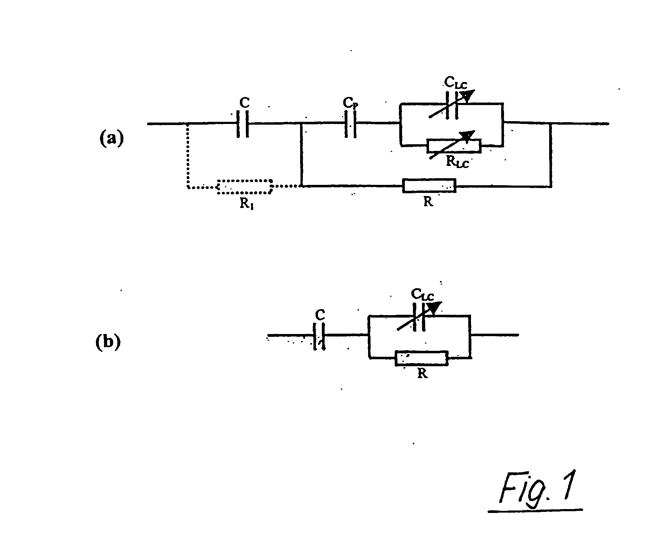

Fig. 1a shows an equivalent circuit of a liquid crystal cell also comprising the above mentioned elements and parameters, but being modified in accordance with the present invention. In addition to the elements shown in Fig. 3b, the liquid crystal cell in a liquid crystal cell system according to the invention is provided with additional capacitor means and resistance means, here an additional capacitor C, an additional resistor R and a further resistor $R_1$. The capacitor C and the resistor R do provide the effect according to the invention and increase the "hysteresis inversion frequency", with the effect that the V-shape, thresholdless switch mode can be realized also with the desired higher operation frequencies f.

The resistor $R_1$ is optional and therefore shown in dashed lines and provides the possibility to apply a D.C. bias voltage to the liquid crystal cell or to discharge the liquid crystal cell (in case of any asymmetry) from electric charges accumulated on the capacitance $C_p$ or the capacitor C.

Fig. 1b shows an equivalent circuit of a cell having no alignment layers, e.g. a cell wherein the liquid crystal material is oriented by shear technique. Therefore in the equivalent circuit the capacitance $C_p$ can be omitted.

Furthermore the liquid crystal cell comprises a liquid crystal material having a very low conductivity, so the resistance of the liquid crystal material $R_{LC}$ can be neglected and is also emitted in the equivalent circuit shown in Fig. 1b. When analyzing this simplified equivalent circuit of a cell according to the present invention, it can be seen that the optimum phase shift $\varphi=\tan^{-1}[\omega R(C+C_{LC})]^{-1}$ and consequently, the thresholdless V-shape switching mode can be realized at a frequency $f=\omega/2\pi=[2\pi R(C+C_{LC})]^{-1}$. The frequency f being the desired operation frequency, can therefore be controlled by choosing values for the additional circuit elements, namely the capacitor means C and the resistor means R.

It should be mentioned at this point that of course the capacitor means C and resistor means R do not have to be arranged precisely in accordance to the above mentioned formula, although this is of course preferred, but that also deviations are possible, still allowing a switching being at least close to the V-shape, thresholdless switching mode. Normally deviations of the values for R and C in the magnitude of $\pm 5$ % or $\pm 10$ %, or even up to $\pm 50$ % or $\pm 100$ % are possible, whereby still the desired effect will be achieved.

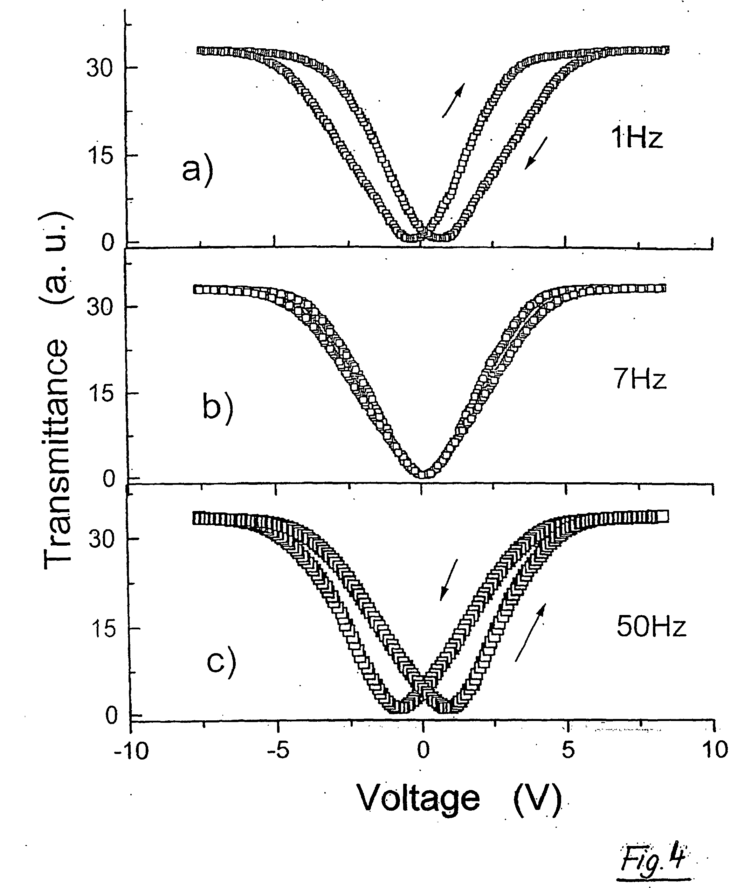

Fig. 4 does show the transmittance of a cell according to the state of art, as e.g. shown in Fig. 2, versus the applied external voltage V for different frequencies, namely 1 Hz, 7 Hz and 50 Hz. The cell used for this measurement is an already optimized cell with a polymer alignment layer (cell No. 1). The material used is a mixture with transition temperatures Cr-10°C-SmC*-58°C-SmA-80°C-Iso, a spontaneous polarization $P_s$ = 100 nC/cm$^2$, a tilt angle of 23,5 deg, and a viscosity of 0.07 Pa·s (0,7 Poise). The liquid crystal material of the cell has a thickness of 1.7 $\mu$m and an area of 14 mm x 18 mm and is filled with the above mentioned mixture and cooled in the smectic C* phase. The liquid crystal material has been oriented with two polyimide aligning layers, each 80 nm thick, one of the polyimide aligning layers has been rubbed.

As the graphs in Fig. 4 show, the optical transmittance of the cell induced by a triangular voltage form ±8.3 V shows the typical thresholdless switching mode only at a frequency of 7 Hz (see Fig. 4b).

Above this frequency a normal hysteresis is observed (see Fig. 4c for 50 Hz), whereas for lower frequencies an abnormal hysteresis occurs (see Fig. 4a for 1 Hz).

The width of hysteresis is equal to the doubled threshold voltage 2 $U_c$, which corresponds to the double coercive field $2E_c$ and can be found from the distance between the two transmittance minima in the Figs. 4a and 4c for the respective frequency.

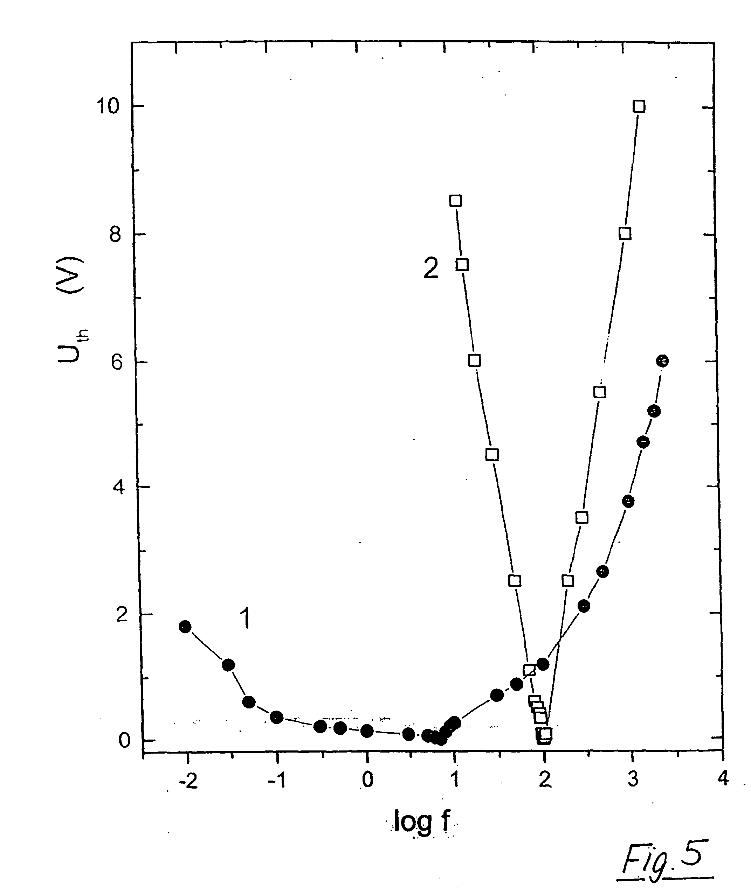

The frequency dependence of the threshold voltage for the optical transmittance of this cell is shown in curve 1 of Fig. 5, showing the threshold voltage $U_{th}$ versus log of the frequency f. As can be taken from this curve, the V-shape thresholdless switching mode can only be realized near the hysteresis inversion frequency in the range of f=1...10Hz.

When measuring a liquid crystal cell according to the invention, here a liquid crystal cell according to above mentioned cell No. 1, however supplied with a capacitor C=22nF in series and a resistor R=180kΩ in parallel with the cell, the result will be the one shown in Curve 2 of Fig. 5. As can be seen the cell according to the invention allows an operation with a V-shape or thresholdless switching mode at a frequency of 100 Hz, thereby increasing the possible operating frequency by about a magnitude.

It should be mentioned at this point that by arranging a liquid crystal cell according to the invention, namely by adding the above mentioned capacitor C and resistor R, the optical contrast remains the same, however, the saturation voltage corresponding to maximum transmission increases. A compromise between the increasing frequency and increasing voltage can be easily found when setting the values for the additional elements.

Further examples do support the huge advantages of the present invention: A conventional liquid crystal cell (cell No. 1, as mentioned above) having an inversion frequency of 1.5 Hz, can be provided according to the invention with a capacitor C=22nF, connected in series. This measurement alone will shift the inversion frequency from 1.5 Hz to 8,9 Hz, thereby increasing the possible operation frequency by about factor 6. When in addition a resistor R=180 kΩ is connected in parallel, the inversion frequency is further shifted up to 99 Hz (about factor 60), whereas a parallel resistor of R=82 kΩ will shift the inversion frequency to 159 Hz (factor >100).

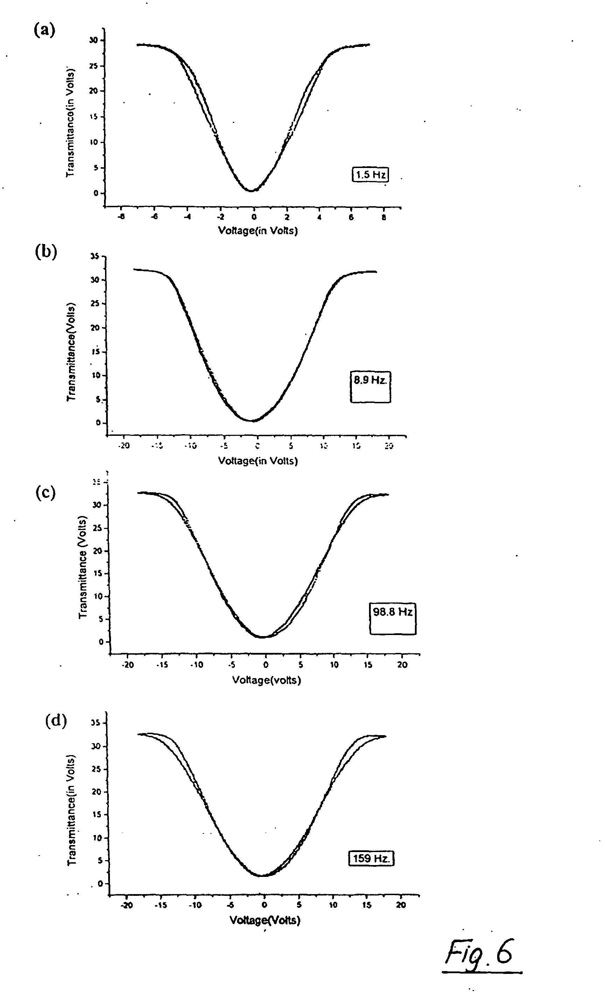

The respective measurements of the transmittance versus voltage are shown in Figs. 6a to 6d, whereas all these graphs do represent the measurement at the hysteresis inversion frequency, i.e. without hysteresis (the graphs in Fig. 6 therefore do represent the equivalent situation as shown in Fig. 4b). Above and below the measured frequencies, a hysteresis, either abnormal or normal, would occur, as explained above with reference to Figs. 4a and 4c.

Fig. 6a shows the measurement for the cell No. 1 according to the state of art, having an inversion frequency of 1.5 Hz. By adding a capacitor C=22nF connected in series according to the invention, the inversion frequency shifts to 8.9 Hz (see Fig. 6b). When further adding a parallel resister with R=180 kΩ, the inversion frequency is further shifted up to nearly 99 Hz (see Fig. 6c). Instead of adding a parallel resistor with R=180 kΩ, a parallel resistor with R=82 kΩ can be connected with the cell according to the invention, which will shift the inversion frequency up to 159 Hz (see Fig. 6d).

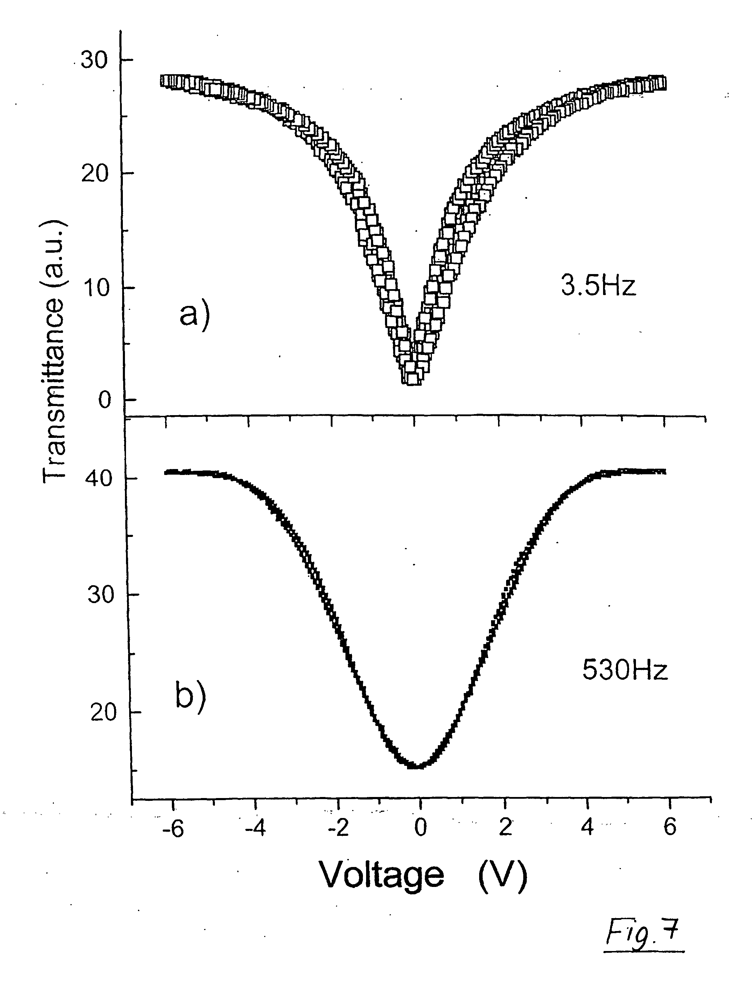

A further example (cell No. 2) has been measured and will be explained with reference to Figure 7: cell No. 2 is a standard EHC cell having a thickness of liquid crystal material of 2 μm. The liquid crystal material is Chisso CS-1025 mixture having a low value of spontaneous polarization, namely $P_s \approx 16nC/cm^2$. For such a cell no V-shape switching is expected from any model discussed in literature, as mentioned above. Indeed, when the Chisso material is fresh, the hysteresis inversion frequency is very low, namely in the range of about 0,7 Hz. However, if the cell no. 2 is filled with aged, more conductive material (leading to a small value for $R_{LC}$) the V-shape switching is observed at a higher frequency, namely in the range of about f = 3,5 Hz. The situation is shown in Fig. 7a, showing the transmittance measured where thus the applied external voltage.

Improving cell no. 2 now according to the invention, namely by connecting a capacitor C=2,7nF in series, the hysteresis inversion frequency increases by a factor of about 150 and reaches 530 Hz as it is shown in Fig. 7b, An incredible increase of the possible operation frequency can therefore easily achieved by the invention.

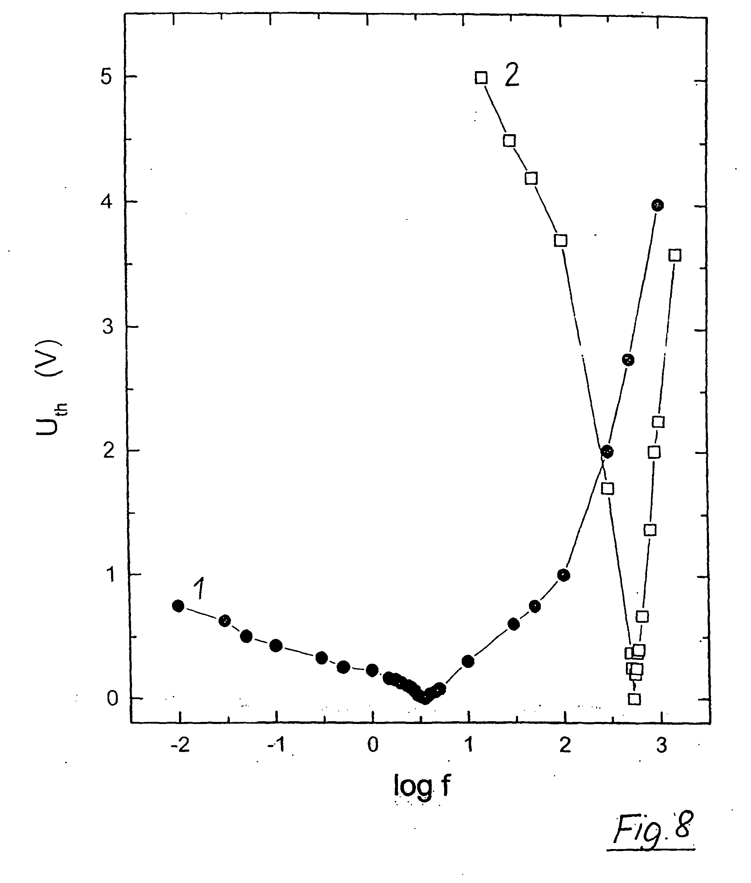

Fig. 8 shows the measurement of the threshold voltage $U_{th}$ versus log of frequency f for above described cell no. 2 according to the State of Art (curve 1) and the improved cell according to the invention (curve 2). Fig. 8 therefore corresponds essentially to Fig. 5, but only with respect to cell no. 2.

As a further example, an additional cell (cell no. 3) has been measured. Cell no. 3 has a liquid crystal layer of a FLC mixture (Smectic C*phase) having a spontaneous polarization $P_S$ of 21nC/ $cm^2$. The cell has deposited on one substrate a very thin polyamide layer as alignment layer. For such a configuration, the hysteresis inversion frequency is f= 0,25 Hz.

When an external capacitor C=22nF is connected in series with this cell and in accordance with the present invention, a hysteresis inversion frequency has been measured being almost two magnitudes higher, namely f = 21 Hz, thereby also providing the huge advantage of enabling a much higher operating frequency, important for modern technology.

As a still further example, a cell was prepared having a liquid crystal layer of a FLC mixture having a spontaneous polarization Ps of 180 nC/cm² at room temperature. The transition temperatures are Cr - 10°C - SmC* - 50°C SmA - 58°C-Iso. The mixture has a helical pitch of 0,27 µM.

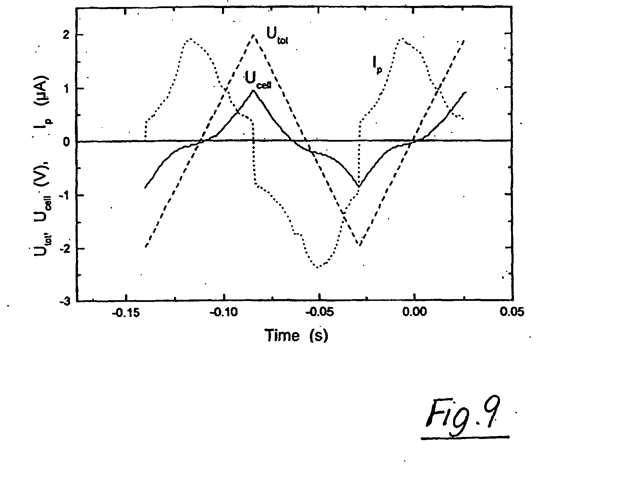

In Fig. 9 the applied external voltage $U_{tot}$ has been plotted versus the time, showing the triangular voltage form. Fig. 9 does further show the voltage "seen" by the liquid crystal cell, therefore the "effective voltage" on the liquid crystal cell $U_{cell}$. As already mentioned above, it is clearly visible that the shape of $U_{cell}$ is quite different from $U_{tot}$, zero points of $U_{tot}$ and $U_{cell}$ do not coincide with each other and this difference will modify a hysteretic behavior of the liquid crystal layer and the shape of the current oscillogram $I_P$ also indicated in Fig. 9.

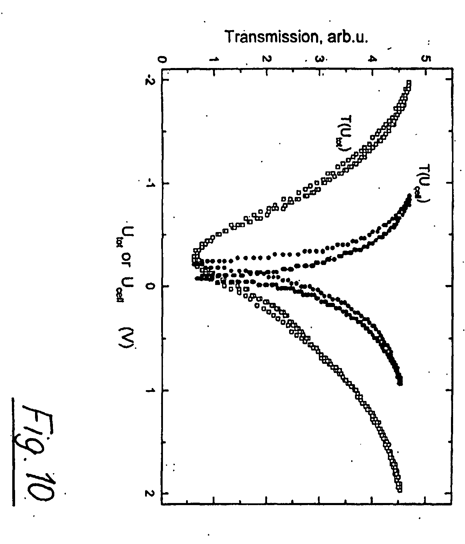

Based on the understanding underlying the present invention, it is therefore also possible to show a graph of the transmission versus both the applied external voltage $U_{tot}$ and the voltage on the liquid crystal cell $U_{cell}$, being the "effective" voltage, which is shown in Fig. 10. As can be seen in Fig. 10. The typical V-shape form is observed only when the optical transmittance is plotted as a function of the total voltage $T(U_{tot})$ applied to the circuit, however a hysteresis typical of a conventional FLC material is clearly seen in the curve $T(U_{cell})$.

Various modifications to the present invention will become apparent to those skilled in the art from the foregoing description and accompanying drawings. Accordingly, the present invention is to be limited solely by the scope of the following claims.

**Claims**

1. A liquid crystal cell system (50) comprising:

   a) two substrates, at least one being transparent, and
   b) at least one ferroelectric or antiferroelectric liquid crystal cell comprising

   b1) two electrode means being provided on the two substrates, respectively, and
   b2) a layer of ferroelectric or antiferroelectric liquid crystal material provided between said two electrode means and having a resistance $R_{LC}$ and a capacitance $C_{LC}$,

   **characterized in that**
   said liquid crystal cell system (50) further comprises

   - capacitance means C connected in series with said liquid crystal cell (10) and resistance means R connected in parallel to said liquid crystal cell (10),
   - wherein said capacitance means C and said resistance means R are arranged so that said liquid crystal cell (10) shows a substantially thresholdless, V-shape form of the characteristic graph "optical transmittance versus applied external voltage V" for a given operation frequency f.

2. A liquid crystal cell system according to claim 1, **characterized in that** said capacitance means C has a value of 1/10 to 10 times of the capacitance $C_{LC}$ of said layer of liquid crystal material (5) in said at least one liquid crystal cell (10).

3. A liquid crystal cell system according to claim 1 or 2, **characterized in that** said resistance means R has a value of less than 50% of the resistance $R_{LC}$ of said layer of liquid crystal material (5).

4. A liquid crystal cell system according to one of the preceding claims, **characterized in that** an additional resistance means $R_1$ is connected in parallel to said capacitance means C.

5. A liquid crystal cell system according to claim 4, **characterized in that** said additional resistance means $R_1$ has a value being higher than $1/2\pi fC$, with f being the operation frequency and C being the capacitance means.

6. A liquid crystal cell system according to one of the preceding claims, **characterized in that** it comprises at least two liquid crystal cells (10) and **in that** each liquid crystal cell (10) in said liquid crystal cell system (50) comprises said capacitance means C and/or said resistance means R.

7. A liquid crystal cell system according to one of the preceding claims, **characterized in that** said capacitance means C and/or said resistance means R are provided on an inner surface of said transparent substrate.

8. A liquid crystal cell system according to one of the claims 1 to 6, **characterized in that** said capacitance means C and/or said resistance means R are provided on an outer surface of said transparent substrate.

9. A liquid crystal cell system according to one of the preceding claims, **characterized in that** said capacitance means C and/or resistance means R are realized by dielectric or semiconductive layers.

10. A liquid crystal cell system according to one of the claims 1 to 5, **characterized in that** two or more liquid crystal cells (10) are connected to said capacitance means C and/or resistance means R.

11. A liquid crystal cell system according to one of the preceding claims, **characterized in that** said liquid crystal cell system comprises at least two liquid crystal cells (10) and **in that** said liquid crystal cells (10) are connected in series, in parallel, in mosaic and/or in a matrix configuration.

**12.** A liquid crystal cell system according to one of the preceding claims, **characterized in that** said liquid crystal material (5) has a spontaneous polarization $P_S$ of above 5 nC/cm$^2$ preferably above 15 nC/cm$^2$, most preferably above 30 nC/cm$^2$.

**13.** A liquid crystal cell system according to one of the preceding claims, **characterized in that** said liquid crystal material (5) has a rotational viscosity being below 1.5 Pa·s, preferably below 1.0 Pa·s most preferably below 0.5 Pa·s.

**14.** A liquid crystal cell system according to one of the preceding claims, **characterized in that** said liquid crystal material (5) is doped with ionic impurities.

**15.** Method of achieving a substantially thresholdless, V-shaped form of the characteristic graph "optical transmittance versus applied external voltage V" of a liquid crystal cell system (50) comprising

a) two substrates, at least one being transparent, and
b) at least one ferroelectric or antiferroelectric liquid crystal cell comprising

b1) two electrode means being provided on the two substrates, respectively, and
b2) a layer of ferroelectric or antiferroelectric liquid crystal material provided between said two electrode means and having a resistance $R_{LC}$ and a capacitance $C_{LC}$,

for a given operation frequency f,
**characterized by**
connecting capacitance means C in series with said liquid crystal cell (10) and resistance means R in parallel to said liquid crystal cell (10).

**16.** Method according to claim 15, **characterized in that** said capacitance means C has a value of 1/10 to 10 times of the capacitance $C_{LC}$ of said layer of liquid crystal material (5) in said at least one liquid crystal cell (10).

**17.** Method according to claims 15 or 16, **characterized in that** said resistance means R has a value of less than 50% of the resistance $R_{LC}$ of said layer of liquid crystal material (5).

**18.** Method according to one of the claims 15 to 17, **characterized in that** said resistance means R is arranged according to the formula $f=(R+R_{LC})/2\pi R*R_{LC}C_{LC}$ wherein f is the operation frequency and $R_{LC}$ and $C_{LC}$ are resistance and capacitance of said layer of liquid crystal material (5).

**Patentansprüche**

**1.** Flüssigkristallzellensystem (50), umfassend:

a) zwei Substrate, von denen mindestens eines transparent ist, und
b) mindestens eine ferroelektrische oder antiferroelektrische Flüssigkristallzelle, die umfaßt

b1) zwei Elektrodenmittel, die jeweils auf den zwei Substraten bereitgestellt sind, und
b2) eine Schicht eines ferroelektrischen oder antiferroelektrischen Flüssigkristallmaterials, welche zwischen den zwei Elektrodenmitteln bereitgestellt ist und einen Widerstand $R_{LC}$ und eine Kapazität $C_{LC}$ aufweist,

**dadurch gekennzeichnet, daß** das Flüssigkristallzellensystem (50) ferner folgendes umfaßt:

- Kapazitätsmittel C, mit der Flüssigkristallzelle (10) in Reihe geschaltet, und Widerstandsmittel R, parallel zu der Flüssigkristallzelle (10) geschaltet,
- wobei das Kapazitätsmittel C und das Widerstandsmittel R so angeordnet sind, daß die Flüssigkristallzelle (10) für eine gegebene Operationsfrequenz f eine im wesentlichen schwellenwertlose, V-förmige Form des charakteristischen Schaubildes "optische Durchlässigkeit gegen angelegte externe Spannung V" zeigt.

**2.** Flüssigkristallzellensystem nach Anspruch 1, **dadurch gekennzeichnet, daß** das Kapazitätsmittel C einen Wert von 1/10 bis zum 10-fachen der Kapazität $C_{LC}$ der Schicht des Flüssigkristallmaterials (5) in der mindestens einen Flüssigkristallzelle (10) aufweist.

**3.** Flüssigkristallzellensystem nach Anspruch 1 oder 2, **dadurch gekennzeichnet, daß** das Widerstandsmittel R einen Wert von weniger als 50 % des Widerstandes $R_{LC}$ der Schicht des Flüssigkristallmaterials (5) aufweist.

**4.** Flüssigkristallzellensystem nach einem der vorangehenden Ansprüche, **dadurch gekennzeichnet, daß** ein zusätzliches Widerstandsmittel $R_1$ parallel zu dem Kapazitätsmittel C geschaltet ist.

**5.** Flüssigkristallzellensystem nach Anspruch 4, **dadurch gekennzeichnet, daß** das zusätzliche Widerstandsmittel $R_1$ einen Wert aufweist, der höher als $1/2\pi fC$ ist, wobei f die Operationsfrequenz und C das Kapazitätsmittel ist.

**6.** Flüssigkristallzellensystem nach einem der vorangehenden Ansprüche, **dadurch gekennzeichnet, daß** es mindestens zwei Flüssigkristallzellen (10) umfaßt, und daß jede Flüssigkristallzelle (10) in dem Flüssigkristallzellensystem (50) das Kapazitätsmittel C und/oder das Widerstandsmittel R umfaßt.

**7.** Flüssigkristallzellensystem nach einem der vorangehenden Ansprüche, **dadurch gekennzeichnet, daß** das Kapazitätsmittel C und/oder das Widerstandsmittel R auf einer inneren Oberfläche des transparenten Substrates bereitgestellt sind.

**8.** Flüssigkristallzellensystem nach einem der Ansprüche 1 bis 6, **dadurch gekennzeichnet, daß** das Kapazitätsmittel C und/oder das Widerstandsmittel R auf einer äußeren Oberfläche des transparenten Substrates bereitgestellt sind.

**9.** Flüssigkristallzellensystem nach einem der vorangehenden Ansprüche, **dadurch gekennzeichnet, daß** das Kapazitätsmittel C und/oder das Widerstandsmittel R durch dielektrische oder halbleitende Schichten realisiert sind.

**10.** Flüssigkristallzellensystem nach einem der Ansprüche 1 bis 5, **dadurch gekennzeichnet, daß** zwei oder mehr Flüssigkristallzellen (10) mit dem Kapazitätsmittel C und/oder Widerstandsmittel R verbunden sind.

**11.** Flüssigkristallzellensystem nach einem der vorangehenden Ansprüche, **dadurch gekennzeichnet, daß** das Flüssigkristallzellensystem mindestens zwei Flüssigkristallzellen (10) umfaßt, und daß die Flüssigkristallzellen (10) in Reihe geschaltet sind, parallel geschaltet sind, in einer Mosaik- und/oder in einer Matrixkonfiguration verbunden sind.

**12.** Flüssigkristallzellensystem nach einem der vorangehenden Ansprüche, **dadurch gekennzeichnet, daß** das Flüssigkristallzellenmaterial (5) eine Spontanpolarisation $P_S$ von über 5 nC/cm$^2$, vorzugsweise über 15 nC/cm$^2$, insbesondere über 30 nC/cm$^2$ aufweist.

**13.** Flüssigkristallzellensystem nach einem der vorangehenden Ansprüche, **dadurch gekennzeichnet, daß** das Flüssigkristallzellenmaterial (5) eine Rotationsviskosität unter 1,5 Pa·s, vorzugsweise unter 1,0 Pa·s, am besten unter 0,5 Pa·s aufweist.

**14.** Flüssigkristallzellensystem nach einem der vorangehenden Ansprüche, **dadurch gekennzeichnet, daß** das Flüssigkristallzellenmaterial (5) mit ionischen Dotierstoffen dotiert ist.

**15.** Verfahren zum Erzielen einer im wesentlichen schwellenwertlosen, V-förmigen Form des charakteristischen Schaubildes "optische Durchlässigkeit gegen angelegte externe Spannung V" eines Flüssigkristallzellensystems (50), das umfaßt

    a) zwei Substrate, von denen mindestens eines transparent ist, und
    b) mindestens eine ferroelektrische oder antiferroelektrische Flüssigkristallzelle, die umfaßt

        b1) zwei Elektrodenmittel, die jeweils auf den zwei Substraten bereitgestellt sind, und
        b2) eine Schicht eines ferroelektrischen oder antiferroelektrischen Flüssigkristallmaterials, welche zwischen den zwei Elektrodenmitteln bereitgestellt ist und einen Widerstand $R_{LC}$ und eine Kapazität $C_{LC}$ aufweist,

für eine gegebene Operationsfrequenz f,
**gekennzeichnet durch**
das In-Reihe-Schalten des Kapazitätsmittels C mit der Flüssigkristallzelle (10) und das Parallelschalten des Widerstandsmittels R zu der Flüssigkristallzelle (10).

**16.** Verfahren nach Anspruch 15, **dadurch gekennzeichnet, daß** das Kapazitätsmittel C einen Wert von 1/10 bis zum 10-fachen der Kapazität $C_{LC}$ der Schicht des Flüssigkristallmaterials (5) in der mindestens einen Flüssigkristallzelle (10) aufweist.

**17.** Verfahren nach Anspruch 15 oder 16, **dadurch gekennzeichnet, daß** das Widerstandsmittel R einen Wert von weniger als 50 % des Widerstandes $R_{LC}$ der Schicht des Flüssigkristallmaterials (5) aufweist.

**18.** Verfahren nach einem der Ansprüche 15 bis 17, **dadurch gekennzeichnet, daß** das Widerstandsmittel R gemäß der Formel $f=(R+R_{LC})/2\pi R^*R_{LC}C_{LC}$ eingerichtet ist, wobei f die Operationsfrequenz und $R_{LC}$ und $C_{LC}$ der Widerstand und die Kapazität der Schicht des Flüssigkristallmaterials sind.

**Revendications**

**1.** Système de cellules à cristaux liquides (50), comprenant :

a) deux substrats, dont au moins l'un est transparent, et

b) au moins une cellule à cristaux liquides ferroélectrique ou antiferroélectrique, comprenant

b1) deux moyens d'électrode prévus sur les deux substrats, respectivement, et

b2) une couche de matériau à cristaux liquides, ferroélectrique ou antiferroélectrique, prévue entre lesdits deux moyens d'électrode et présentant une résistance $R_{LC}$ et une capacité $C_{LC}$,

**caractérisé en ce que**

ledit système de cellules à cristaux liquides (50) comprend en outre

- des moyens de capacité C connectés en série avec ladite cellule à cristaux liquides (10) et des moyens de résistance R connectés en parallèle à ladite cellule à cristaux liquides (10),

- dans lequel lesdits moyens de capacité C et lesdits moyens de résistance R sont agencés de sorte que ladite cellule à cristaux liquides (10) montre une forme en V, substantiellement sans seuil, du graphique caractéristique de la "transmission optique par rapport à la tension externe V appliquée" pour une fréquence de fonctionnement f donnée.

2. Système de cellules à cristaux liquides selon la revendication 1, **caractérisé en ce que** lesdits moyens de capacité C présentent une valeur de 1/10 à 10 fois la capacité $C_{LC}$ de ladite couche de matériau à cristaux liquides (5) dans ladite au moins une cellule à cristaux liquides (10).

3. Système de cellules à cristaux liquides selon la revendication 1 ou 2, **caractérisé en ce que** lesdits moyens de résistance R présentent une valeur de moins de 50 % de la résistance $R_{LC}$ de ladite couche de matériau à cristaux liquides (5).

4. Système de cellules à cristaux liquides selon l'une quelconque des revendications précédentes, **caractérisé en ce que** des moyens de résistance supplémentaires $R_1$ sont connectés en parallèle auxdits moyens de capacité C.

5. Système de cellules à cristaux liquides selon la revendication 4, **caractérisé en ce que** lesdits moyens de résistance supplémentaires $R_1$ présentent une valeur supérieure à $1/2\pi fC$, f étant la fréquence de fonctionnement et C étant les moyens de capacité.

6. Système de cellules à cristaux liquides selon l'une quelconque des revendications précédentes, **ca-**

**ractérisé en ce qu'**il comprend au moins deux cellules à cristaux liquides (10) et **en ce que** chaque cellule à cristaux liquides (10) dans ledit système de cellules à cristaux liquides (50) comprend lesdits moyens de capacité C et/ou lesdits moyens de résistance R.

7. Système de cellules à cristaux liquides selon l'une quelconque des revendications précédentes, **caractérisé en ce que** lesdits moyens de capacité C et/ou lesdits moyens de résistance R sont prévus sur une surface intérieure dudit substrat transparent.

8. Système de cellules à cristaux liquides selon l'une quelconque des revendications 1 à 6, **caractérisé en ce que** lesdits moyens de capacité C et/ou lesdits moyens de résistance R sont prévus sur une surface extérieure dudit substrat transparent.

9. Système de cellules à cristaux liquides selon l'une quelconque des revendications précédentes, **caractérisé en ce que** lesdits moyens de capacité C et/ou moyens de résistance R sont réalisés par des couches diélectriques ou semi-conductrices.

10. Système de cellules à cristaux liquides selon l'une quelconque des revendications 1 à 5, **caractérisé en ce que** deux ou plusieurs cellules à cristaux liquides (10) sont connectées auxdits moyens de capacité C et/ou moyens de résistance R.

11. Système de cellules à cristaux liquides selon l'une quelconque des revendications précédentes, **caractérisé en ce que** ledit système de cellules à cristaux liquides comprend au moins deux cellules à cristaux liquides (10) et **en ce que** lesdites cellules à cristaux liquides (10) sont connectées en série, en parallèle, en mosaïque et/ou dans une configuration en matrice.

12. Système de cellules à cristaux liquides selon l'une quelconque des revendications précédentes, **caractérisé en ce que** ledit matériau à cristaux liquides (5) présente une polarisation spontanée $P_S$ de plus de 5 $nC/cm^2$, de préférence de plus de 15 $nC/cm^2$, et de la plus grande préférence de plus de 30 $nC/cm^2$.

13. Système de cellules à cristaux liquides selon l'une quelconque des revendications précédentes, **caractérisé en ce que** ledit matériau à cristaux liquides (5) présente une viscosité rotative inférieure à 1,5 Pa·s, de préférence inférieure à 1,0 Pa·s, de la plus grande préférence inférieure à 0,5 Pa·s.

14. Système de cellules à cristaux liquides selon l'une quelconque des revendications précédentes, **ca-**

**ractérisé en ce que** ledit matériau à cristaux liquides (5) est dopé avec des impuretés ioniques.

15. Procédé consistant à obtenir une forme en V, substantiellement sans seuil, du graphique caractéristique de la "transmission optique par rapport à la tension externe V appliquée" d'un système de cellules à cristaux liquides (50), comprenant

    a) deux substrats, dont au moins l'un est transparent, et
    b) au moins une cellule à cristaux liquides ferroélectrique ou antiferroélectrique, comprenant

        b1) deux moyens d'électrode prévus sur les deux substrats, respectivement, et
        b2) une couche de matériau à cristaux liquides, ferroélectrique ou antiferroélectrique, prévue entre lesdits deux moyens d'électrode et présentant une résistance $R_{LC}$ et une capacité $C_{LC}$,

    pour une fréquence de fonctionnement f donnée,
    **caractérisé par** l'étape consistant à connecter les moyens de capacité C en série avec ladite cellule à cristaux liquides (10) et les moyens de résistance R en parallèle avec ladite cellule à cristaux liquides (10).

16. Procédé selon la revendication 15, **caractérisé en ce que** lesdits moyens de capacité C ont une valeur de 1/10 à 10 fois la capacité $C_{LC}$ de ladite couche de matériau à cristaux liquides (5) dans ladite au moins une cellule à cristaux liquides (10).

17. Procédé selon la revendication 15 ou 16, **caractérisé en ce que** lesdits moyens de résistance R présentent une valeur inférieure à 50 % de la résistance $R_{LC}$ de ladite couche de matériau à cristaux liquides (5).

18. Procédé selon l'une quelconque des revendications 15 à 17, **caractérisé en ce que** lesdits moyens de résistance R sont agencés selon la formule $f = (R+R_{LC})/2\pi R^*R_{LC}C_{LC}$, où f est la fréquence de fonctionnement et $R_{LC}$ et $C_{LC}$ sont la résistance et la capacité de ladite couche de matériau à cristaux liquides (5).

**(a)**

**(b)**

*Fig. 1*

Fig.2

**(a)**

**(b)**

Fig. 3

Fig. 4

Fig.5

(a)

(b)

(c)

(d)

Fig. 6

*Fig. 7*

Fig. 8

*Fig.9*

Fig. 10